# EUROPEAN PATENT SPECIFICATION

(11) **EP 0 731 072 B1**
(45) Date of publication and mention of the grant of the patent: **02.06.1999**
(21) Application number: 96400455.0
(22) Date of filing: 04.03.1996
(51) Int. Cl.: C07C 15/107, C07C 309/31, C07G 17/00, C10M 159/24

(54) **Isomerized linear alkylaryl sulphonates, useful as additives for lubricating oils and corresponding alkylaryl hydrocarbons**
Als Schmieröladditive geeignete isomerisierte geradkettige Alkylarylsulfonate und ihre Alkylaryl-Zwischenprodukte
Alkylaryl-sulfonates linéaires isomérisés utiles comme additifs pour huiles lubrifiantes et hydrocarbures alkylaryliques intermédiaires

(30) Priority: 08.03.1995 FR 9502709
(43) Date of publication of application: 11.09.1996
(73) Proprietor: Chevron Chemical S.A., F-92527 Neuilly-sur-Seine Cédex (FR)
(72) Inventor: Le Coent, Jean-Louis, 76620 Le Havre (FR)
(74) Representative: Santarelli, Marc

(56) References cited:
- EP-A- 0 001 318
- EP-A- 0 354 621
- WO-A-94/05748
- GB-A- 1 041 491
- US-A- 3 764 533
- US-A- 5 320 762

## Description

A subject of the present invention is superalkalinized alkylaryl sulphonates of alkaline earth metals obtained from linear alkylaryl sulphonic acids, and useful as detergent-dispersant additives for lubricating oils, processes for their preparation and an intermediate alkylation product.

It is already known in the prior art to prepare slightly or highly superalkalinized sulphonates from sulphonic acids obtained by the sulphonation of different alkylaryl hydrocarbons and of an excess of alkaline earth base.

The alkylaryl hydrocarbons subjected to the sulphonation reaction result from alkylation by the Friedel-Crafts reaction of different aryl hydrocarbons, in particular aromatic, by two different types of olefin:
. branched olefins resulting from the oligo-polymerization of propylene into C₁₅ to C₄₀ hydrocarbons, in particular the tetra polymer of dimerized propylene and a C₂₄ olefin,
. and linear olefins that result from the oligo-polymerization of ethylene into C₁₄ to C₄₀ hydrocarbons.

Thus the European Patent No.1.318 of the Exxon company, published in 1981, describes superalkalinized monoalkyl-orthoxylene sulphonates and mono-alkyl-toluene sulphonates resulting from the alkylation of the corresponding aromatic hydrocarbons by a mixture of branched olefins comprising a maximum proportion of 30% of linear olefin.

Moreover, the French Patent No.2,564,830 of the Orogil company, the former name of the Applicant, and whose corresponding Application was published in 1985, and which corresponds to Patent US-A-4,764,295, describes alkylaryl sulphonates of alkaline earth metals resulting from alkylation by a linear olefin.

In both cases, the alkylation reaction takes place in the presence of a Friedel-Crafts catalyst with a high excess of moles of the aryl hydrocarbon in relation to those of the olefin, in order to obtain, after recycling said excess, the corresponding mono-alkylaryl hydrocarbon.

However, the Applicant has found that, by using a linear mono-olefin having a molar proportion of alpha-olefin of at least 80%, it obtained, during the alkylation reaction with benzene, an alkylaryl hydrocarbon in which the molar proportion of the phenyl group in positions 1 and 2 of the starting linear olefin chain was at least 25%.

Now, this high proportion of olefin having a phenyl group in positions 1 and 2 is reflected by a sulphonate which, when prepared by the process described in the aforementioned French Patent 2,564,830, shows hygroscopic properties, such that it forms a superficial "skin", making this product unacceptable as an additive for lubricating oil.

The formation of this superficial skin was generally accompanied by a very slow filtration rate, a slight incorporation of calcium, a deterioration in anti-rust performance, and the undesirable occurrence of a turbid appearance, indeed of a sedimentation, when the sulphonate prepared in this way was added in a proportion of 10% by weight to a standard lubricating oil and stored for examination.

Through identification by chromatography, the Applicant has studied the different isomers, aryl-fixed in positions 1, 2 or those following on a linear mono-olefinic chain, their respective influence on the properties of the corresponding alkylaryl sulphonates of alkaline earth metal obtained from these different isomers.

And the Applicant discovered that it could overcome the aforementioned drawbacks, in so far as the molar proportion of aryl hydrocarbon, other than benzene, fixed to the carbon atoms situated in positions 1 or 2 of the starting linear mono-olefin, was comprised between 0 and 13%, and preferably between 5 and 11% and in particular between 7 and 10%.

Without wishing to be bound by any scientific explanation, it is assumed that the more the aryl hydrocarbon is fixed to a carbon atom located opposite the ends of the hydrocarbon chain of the linear mono-olefin, the more pronounced is the hydrophobic character of the corresponding alkylaryl hydrocarbon, and hence the good properties of the additive in a lubricating oil.

Therefore a subject of the present invention is a superalkalinized alkylaryl sulphonate of alkaline earth metal, in which the aryl radical is other than phenyl and the alkyl chain, which contains between 14 and 40 carbon atoms, is a linear chain, in which the aryl-sulphonate radical of alkaline earth metal is fixed, in a molar proportion of 0 to 13%, preferably between 5 and 11%, and more particularly between 7 and 10%, in positions 1 and 2 of the linear alkyl chain.

In fact, these alkylaryl sulphonates, in particular those in which the aryl radical is a substituted phenyl radical, preferably a tolyl, xylyl radical, in particular ortho-xylyl, ethyl-phenyl or cumenyl, exhibit a set of properties, including solubility in lubricating oil, filtration rate, incorporation of alkaline earth metal in the medium, anti-rust properties and an absence or a delay in the formation of a skin, which makes them in particular attractive as detergent-dispersion additives in this type of oil.

The content of 13% is the threshold above which it is no longer possible to obtain simultaneously a suitable improvement in the aforementioned five properties.

The content of 11% is the upper limit of the additive prepared on an industrial scale, and for which an attempt is made to obtain an alkylaryl sulphonate exhibiting all of these five properties.

The content of 10% is the desired value during the industrial production of this additive.

A subject of the present invention is also processes for the preparation of such an alkylaryl sulphonate.

A first process according to the invention comprises the alkylation, according to the Friedel-Crafts reaction, of an aryl hydrocarbon other than benzene, by a linear mono-olefin, the sulphonation of the alkylaryl hydrocarbon obtained, and the reaction of the resulting sulphonic acid with an excess of alkaline earth base, in which the linear mono-olefin contains a molar proportion of between 0 and 13%, preferably between 5 and 11%, and more particularly between 7 and 10% of alpha olefin.

A second process has been developed by the Applicant to obtain superalkalinized alkylaryl sulphonates of alkaline earth metal according to the invention with a mono-alpha olefin.

It consists, in a conventional process comprising the alkylation, by the Friedel-Crafts reaction, of an aryl hydrocarbon other than benzene, by a linear mono-alpha olefin, the sulphonation of the alkylaryl hydrocarbon obtained and the reaction of the resulting sulphonic acid with an excess of alkaline earth base, in splitting the alkylation reaction into a first stage in which the molar ratio between the aryl hydrocarbon and the linear mono-alpha olefin is a maximum of 1.5 and preferably 1, and in a second stage, in which said ratio is at least 2 and preferably 5.

In both the first and the second processes, the catalyst used for the Friedel-Crafts reaction is preferably chosen from hydrofluoric acid, aluminium chloride, boron fluoride, a sulphonic ion exchange resin, and an acid-activated clay.

The conditions of this alkylation reaction are a function of the type of Friedel-Crafts catalyst used.

In the case of hydrofluoric acid, the temperature is preferably comprised between 20 and 70°C and the pressure is comprised between atmospheric pressure and 10.10⁵Pa.

In the case of aluminium chloride or boron fluoride, these conditions are those described in the literature regarding this reaction.

Finally, in the case of a solid Friedel-Crafts catalyst, such as a sulphonic ion exchange resin or an acid-activated clay, the temperature of the alkylation reaction is comprised between 40 and 250°C and the pressure is comprised between atmospheric pressure and 15.10⁵ Pa.

Although the Applicant does not wish to be bound by any particular explanation, it would appear that the maintenance, at the start of the alkylation reaction, of a molar ratio of aryl hydrocarbon to linear mono-alpha olefin of a maximum of 1.5 and preferably 1, in the presence of a Friedel-Crafts catalyst, causes a migration of the double bond of the linear olefin from the terminal alpha position to a more central position of the olefin, where the aryl radical is fixed.

It is assumed that the alpha-olefin reacts with the Friedel-Crafts catalyst to form an intermediate carbonium ion, which is isomerized, said isomerization occurring more easily if the relative proportion of alpha-olefin is higher.

The alkylation of this carbonium ion occurs by an aromatic electrophilic substitution reaction where a hydrogen atom of the aromatic ring is substituted by a carbon atom of the olefinic chain.

This isomerization reaction is unexpected because, hitherto, the highly exothermic alkylation reaction always occurred with a high molar excess of aryl hydrocarbon, both for benzene or one of its derivatives substituted by alkyl radicals, in relation to the starting olefin, and for a linear alpha olefin or a branched olefin.

It must nevertheless be observed that this first isomerization stage must be followed, in the process according to the invention, by a second stage in which the molar proportion of the aryl hydrocarbon is 2 and preferably 5 times greater than that of the starting linear olefin.

In addition a subject of the present invention is the use of the new superalkalinized alkylaryl sulphonates of alkaline earth metal as detergent-dispersant additives for lubricating oils and lubricating oils containing them, in a proportion of between 0.1 and 15% by weight.

Also a subject of the present invention is the alkylaryl hydrocarbons comprising an aryl substituent, other than phenyl, on a linear alkyl chain containing between 14 and 40 carbon atoms, and in which the molar proportion of aryl substituent on the carbon atoms in positions 1 and 2 of the linear alkyl chain is comprised between 0 and 13%, preferably 5 and 11%, and more particularly between 7 and 10%.

Also a subject of the present invention is processes for the preparation of this alkylaryl hydrocarbon, either by direct reaction of the selected aryl hydrocarbon, according to the Friedel-Crafts reaction, with a linear mono-olefin, of which the molar proportion is comprised between 0 and 13%, preferably 5 and 11%, and more particularly between 7 and 10% of alpha olefin, or by a reaction of the selected aryl hydrocarbon, according to the Friedel-Crafts reaction, with a linear mono-alpha olefin in two stages, that is to say a first stage in which the molar ratio of the aryl hydrocarbon other than benzene to the mono-alpha olefin is a maximum of 1.5 and preferably of 1, and a second stage in which said ratio is at least 2 and preferably 5.

Finally a subject of the present invention is the use of said alkylaryl hydrocarbons for the preparation of detergent-dispersant additives for lubricating oils.

Within the scope of the present description, the term linear mono-alpha olefin denotes an olefin or a mixture of straight-chain olefins, which can be obtained by the oligo-polymerization of ethylene, and which contain between 14 and 40, preferably between 16 and 30, and more particularly between 20 and 24 carbon atoms, and in which the molar proportion of mono-alpha olefin is at least 80%.

Specific examples of suitable linear mono-alpha olefins are constituted by the C₁₆ and C₁₈ olefins, by cuts of C₁₄ to C₁₆, C₁₄ to C₁₈, C₁₆ to C₁₈ or C₂₀ to C₂₄ olefins, or by combinations of several of them.

The C₁₄ to C₄₀ linear mono-alpha olefins, which can be obtained by the direct oligo-polymerization of ethylene, have an infrared absorption spectrum that exhibits an absorption peak at 908 cm⁻¹, characteristic of the presence of the ethylene double bond at the end of the chain, on the carbon atoms occupying positions 1 and 2 of the olefin: also distinguished therein are two other absorption peaks at wavelengths of 991 and 1641 cm⁻¹.

By contrast, the isomerized C₁₄ to C₄₀ linear mono-olefins, that is to say in which the molar proportion of alpha olefin is comprised between 0 and 13%, preferably between 5 and 11%, and more particularly between 7 and 10%, have an infrared absorption spectrum that exhibits no peak in the regions of 908, 991 and 1641 cm⁻¹, but which reveals the appearance of an absorption peak at 966 cm⁻¹, characteristic of a trans internal ethylene double bond.

These isomerized mono-olefins can be obtained by heating, under atmospheric pressure at a temperature of the order of 120°C for a period of 144 hours, of a cut of C₂₀ to C₂₄ mono-olefins obtained by the polymerization of ethylene, on a iron pentacarbonyl based catalyst, for example as described in the Patent US-A-5,320,762.

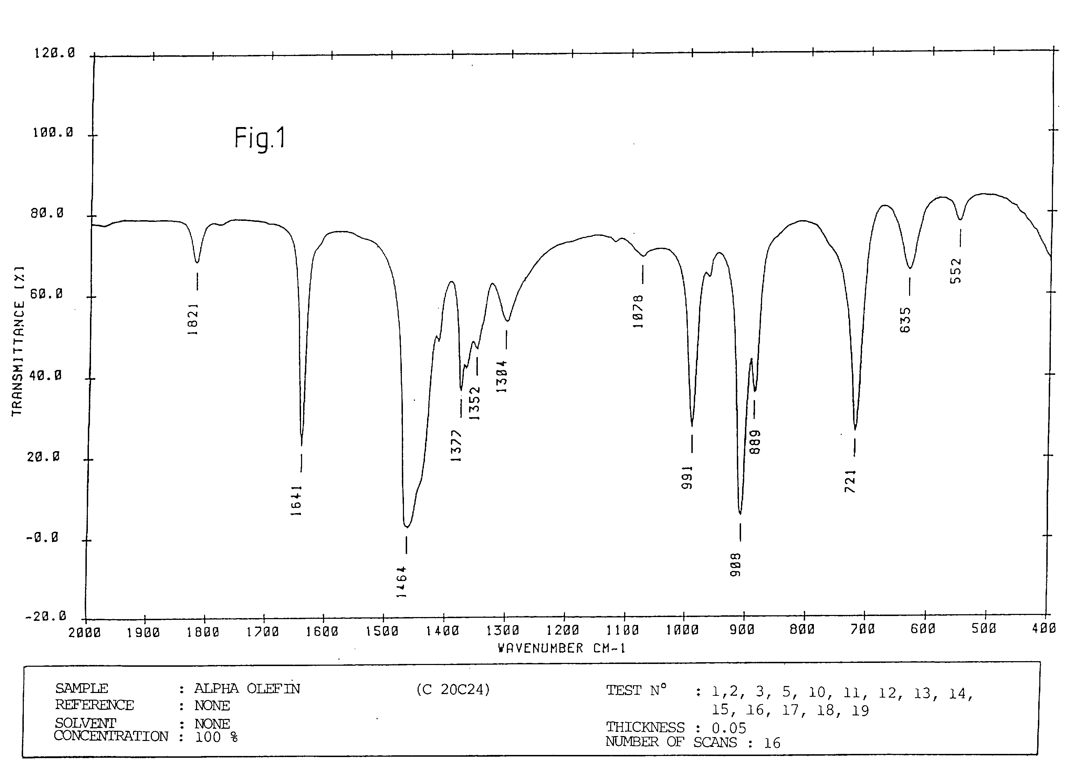

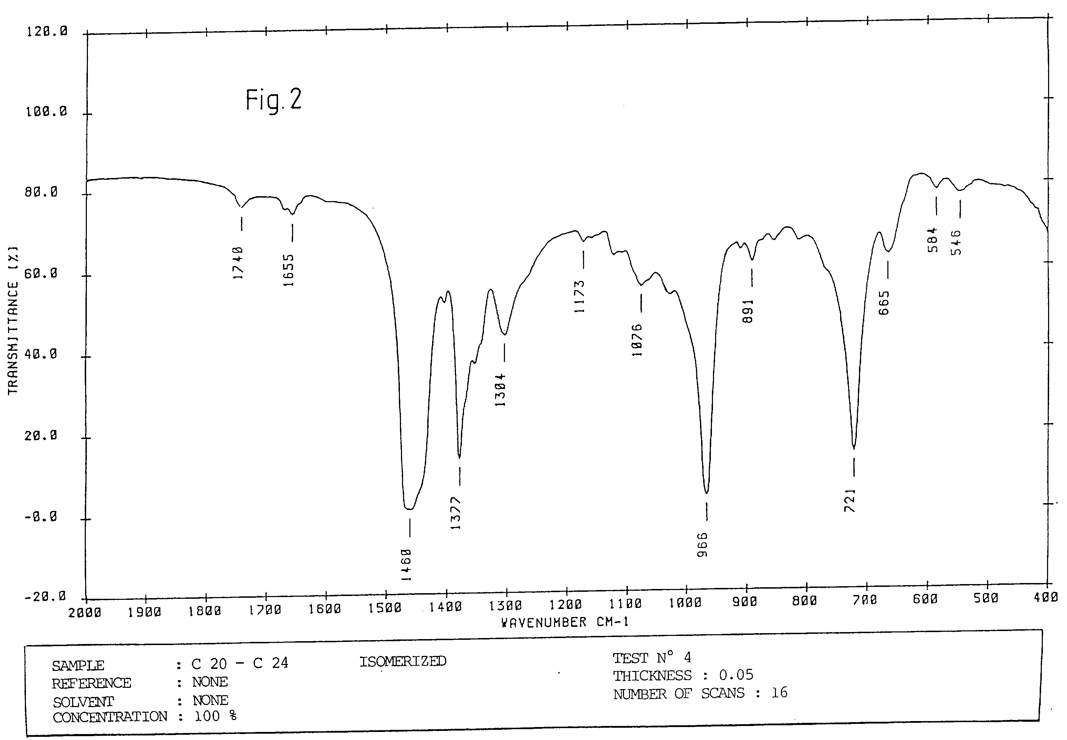

Figures 1 and 2 which are attached illustrate this difference, by showing the infrared spectra of a cut of C₂₀ to C₄₀ linear mono-alpha olefins, obtained directly by the polymerization of ethylene, in Figure 1, and after the isomerization of this cut, by passage on an iron pentacarbonyl catalyst, to reduce its molar content of alpha olefin to less than 10%, in Figure 2.

The aryl hydrocarbons with which these linear olefins are reacted can be aromatic hydrocarbons substituted by at least one C₁ to C₅ alkyl radical and in particular benzene hydrocarbons substituted by one or two C₃ to C₁₀ alkyl radicals. It is much more preferable to use alkyl derivatives of benzene, such as toluene, xylenes and in particular ortho-xylene, ethyl benzene and cumene, because they favour the monoalkylation by the linear mono-olefin according to the Friedel-Crafts reaction, due to the presence of the substituents already present on the aromatic ring.

The Friedel-Crafts catalysts used in the alkylation reaction in one or two stages according to the invention are standard catalysts and may include in particular hydrofluoric acid, boron fluoride BF₃, aluminium chloride AlCl₃, a sulphonic ion exchange resin, or an acid-activated clay.

The two-stage alkylation reaction according to the present invention can be implemented continuously in two successive reactors in the presence of the catalyst.

In the first reactor, the molar proportion of aryl hydrocarbon in relation to the linear olefin is a maximum of 1.5 and preferably 1.2, and more preferably 1, to slow down the alkylation reaction and to favour the isomerization of the initial linear mono-alpha olefin by the migration of its double bond towards the middle of the hydrocarbon chain of the olefin.

In the second reactor, the molar proportion of aryl hydrocarbon in relation to the linear mono-alpha olefin is increased to a minimum of 2:1, and preferably of 5:1 or more, to complete the alkylation reaction.

And at the end of the successive passage in the two reactors, the Friedel-Crafts catalyst is collected by phase separation, and the excess aryl hydrocarbon is recovered, as in the previous processes.

The same result can also be obtained by carrying out separately the isomerization of the starting linear alpha olefin, and then by adding the aryl hydrocarbon to carry out the catalytic alkylation reaction, with a Friedel-Crafts catalyst.

The alkylation product obtained at the end of the alkylation reaction of either process according to the present invention is a new intermediate product, which is characterized in particular by its low molar proportion, comprised between 0 and 13%, of aryl isomer fixed on the carbon atoms in positions 1 or 2 of the starting linear mono-olefinic chain.

The analysis of the alkylation products, which are a subject of the present invention, requires not only infrared spectrography, but also gas chromatography.

The latter technique, carried out on a semi-capillary column, can be used to separate and to calculate the proportion of each of the isomers.

The chromatograms obtained by this technique reveal the absence of 1-aryl isomer; the peak corresponding to the longest retention time is that of the 2-aryl isomer; the peak with the longest retention time less one is that of the 3-aryl isomer, the peak with the longest retention time less two is that of the 4-aryl isomer, and the following peak, considering the length of the column used (15 metres), is the most pronounced because it combines most of all the other isomers in which the aryl group is fixed to carbon atoms in position 4, 5 and those following of the linear alkyl chain.

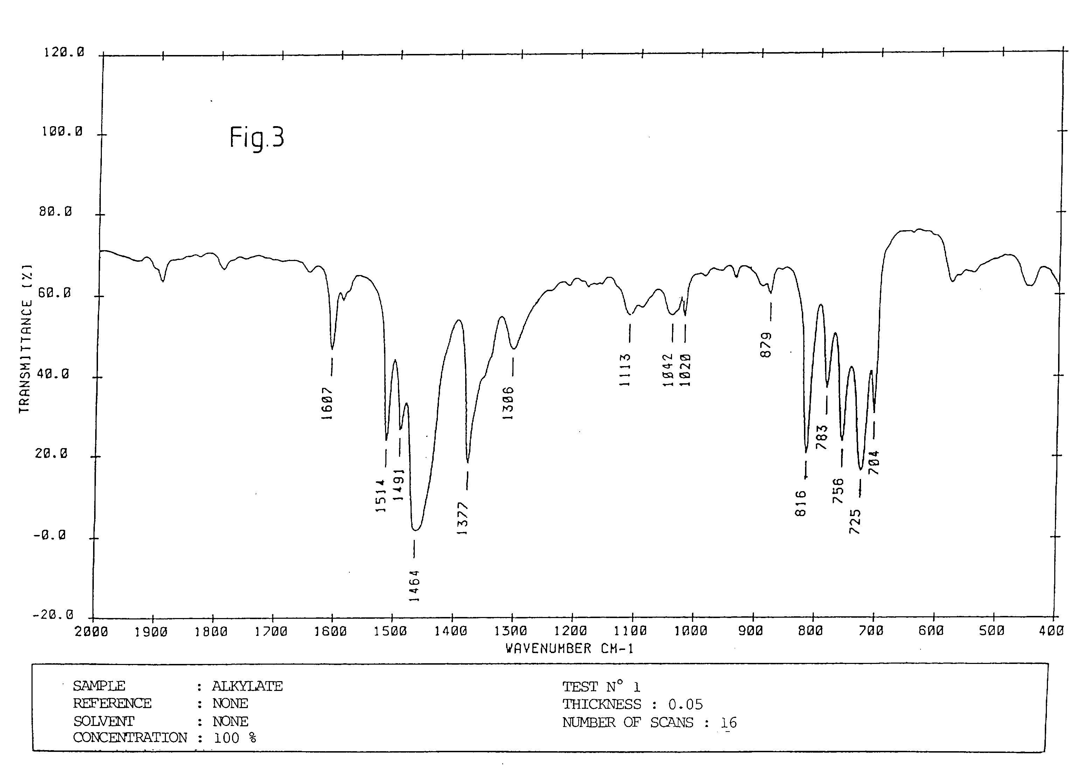

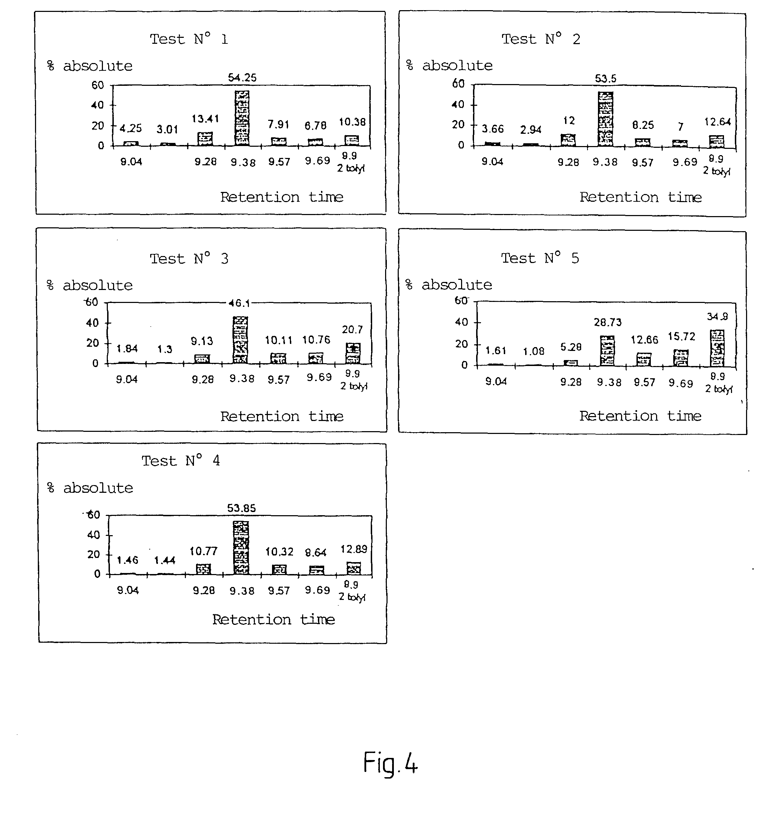

Figure 3 shows the infrared spectrum of an alkylaryl hydrocarbon of the invention, and Figure 4 shows a series of diagrams, illustrating the integration of the gas chromatogram peaks of the same hydrocarbons, in the form of molar proportions in per cent as a function of retention times in minutes.

The preferred alkylation products are those resulting from the alkylation of alkyl derivatives of benzene, such as toluene, xylenes, and in particular ortho-xylene, ethyl benzene and cumene.

The following sulphonation stage of the process according to the invention is carried out by techniques known per se, for example by reaction of the product of the alkylation stage, with concentrated sulphuric acid, with an oleum or with sulphuric anhydride dissolved in sulphurous anhydride. This sulphonation reaction can also be carried out by putting in contact the reagents (alkylate and sulphuric anhydride) in the form of a film in co-current or counter-current flow. After sulphonation, the sulphonic acid can be purified by standard techniques, such as washing with water or thermal treatment, under agitation with bubbling through of nitrogen.

Finally the last stage of the reaction of sulphonic acid with an excess of alkaline earth base can be carried out by the addition of an oxide or hydroxide of alkaline earth metal, such as magnesium, calcium or barium, and in particular lime.

This neutralization reaction is implemented in a dilution oil, with an alcohol having a boiling point above 80°C and preferably with a carboxylic acid containing 1 to 4 carbon atoms, in the presence of water, as described in particular in aforementioned French Patent Application No. 2,564,830.

Among the alcohols with boiling points above 80 °C, the preferable choice is the linear or branched aliphatic mono-alcohols containing 4 to 10 carbon atoms, such as isobutanol, 2 ethyl hexanol and C₈ to C₁₀ oxo alcohols.

Among the carboxylic acids that can be employed are preferably formic acid, acetic acid and their mixtures.

Among the dilution oils that are suitable for the neutralization stage are paraffinic oils such as Neutral 100 oil, as well as naphthenic or mixed oils.

For the implementation conditions, such as the proportions of reagents and the conditions of temperature and pressure, reference is explicitly made to those described in the prior art and in particular in the French Patent Application No. 2,564.830 of the Applicant.

After elimination of the water and alcohol, the product is filtered to remove solid matter and the alkylaryl sulphonate of alkaline earth metal obtained is collected.

The alkylaryl sulphonates according to the invention can be weakly or highly superalkalinized, that is to say their base number (BN), according to Standard ASTM-D-2896, can range from 10 to 500 and they can be of use in particular as detergent-dispersant additives for lubricating oils.

However, the alkylaryl sulphonates according to the invention are particularly useful when their base number is low and corresponds to a BN range comprised between 10 and 40.

This is the reason why the present invention will be illustrated by examples in which, during the reaction of the sulphonic acid with an alkaline earth base, it is an aim to obtain an alkylaryl sulphonate having a BN of the order of 20.

If an alkylation product of benzene is used, the Applicant has found that the formation of a skin could be avoided, and that it was necessary to add calcium chloride during the sulphonation reaction to decrease the viscosity of the reaction medium.

If, however, the alkylation product has been obtained by the alkylation of an aryl hydrocarbon already substituted by at least one alkyl group, such as toluene, ethyl benzene, orthoxylene and cumene, it is no longer necessary to add calcium or ammonium chloride, and the formation of a skin can be avoided during the outdoor storage of the sulphonate, in so far as the content of aryl isomers fixed in positions 1 and 2 is comprised between 0 and 13% in moles.

Said detergent-dispersant additives can be added to the lubricating oils in quantities of up to 15% by weight according to the type of lubricating oil.

The lubricating oils to which the sulphonates of the present invention can be added may be lubricating oils with a naphthenic, paraffinic or mixed base, they can consist of mineral oils or originate from coal distillation products or be constituted by synthetic oils, such as polymers of alkylenes or esters of mineral acids or of carboxylic acids.

The present invention will now be described with the help of the following examples, which are only intended to illustrate the particular implementations of different aspects of the invention and in which Example 1 represents the implementation preferred at present.

### Example 1

### (a) Alkylation

In a first 1.15 litre reactor, agitated and heated by double jacket to 64°C, an HF catalyst was loaded continuously at a rate of 33 cm³/min, a C₂₀ to C₂₄ normal linear mono-alpha olefin the infrared spectrum of which is reproduced in Figure 1 at a rate of 37.5 cm³/min, and toluene at a rate of 12.86 cm³/min.

These operating conditions correspond to an HF catalyst/alpha olefin ratio of 1.2 in moles, and a residence time of 13.8 min.

In a second 1.15 litre reactor, agitated and heated by double jacket to 60°C, the product from the first reactor, the same HF catalyst at rate of 19.87 cm³/min and toluene at a rate of 51.64 cm³/min, were then introduced.

These operating conditions correspond to an HF catalyst/alpha olefin ratio of 1.41 by volume and a total toluene/alpha olefin ratio of 6 in moles.

An unheated settler is used to recover the organic phase and to recycle a portion of the HF catalyst to the first reactor.

The pressure in both reactors and in the settler was maintained at 5x10⁵ Pa.

The excess toluene is then distilled by passage through a preheater at 120°C, and introduction into the bottom of a column at 280°C.

During this second alkylation phase, the process was continuous, with the product passing from the first reactor to the second, and then to the settler, and finally to the preheater and to the column to remove the toluene.

The alkylate obtained exhibits an infrared spectrum shown in Figure 3.

Its gas chromatogram, shown in Figure 4, was obtained on a Carlo Erba Series Vega 6000 instrument, equipped with a 15 metre long semi-capillary column, with an SPB-5 Supelco stationary phase with flame ionization detector, with the heater and column temperatures varying from 70 to 320°C with a programming of 20°/min and a final plateau of 10 min.

### (b) Sulphonation

The sulphuric anhydride used for the sulphonation of the alkylate is obtained by the oxidation of SO₂ in a furnace at 450°C with vanadium oxide as a catalyst.

The sulphonation reaction takes place in a tube maintained at 65°C by falling film, the sulphuric anhydride being diluted with nitrogen and the alkylate/SO₂ molar ratio being maintained at 1.05.

The residual sulphuric acid was then eliminated by thermal treatment after dilution with 10% of 100 N oil, bubbling through nitrogen at the rate of 10 l/h/kg of product and agitation at 85°C, until a lower residual H₂SO₄ content was obtained (maximum 0.5%).

### (c) Superalkalinization

In this stage, relative molar proportions of Ca(OH)₂ and sulphonic acid are reacted so as to obtain a proportion of 35% of lime non-neutralized by the sulphonic acid in the final product. It is this 35% proportion of non-neutralized lime which will allow the final sulphonate to be obtained with a BN of the order of 20 according to the Standard ASTM-D-2896.

In order to achieve this, a quantity of Ca(OH)₂ is added which does not correspond to a stoichiometric neutralization of the quantity of sulphonic acid reacted, namely 0.5 mole of Ca(OH)₂ per mole of this sulphonic acid, but an excess of Ca(OH)₂ is added relative to this stoichiometric quantity, that is to say a proportion of 0.77 mole of Ca(OH)₂ per mole of sulphonic acid, in order to obtain a BN of about 20.

These superalkalinization conditions, which will be followed in all Examples 1 to 22 of the present Patent Application are implemented in the present Example 1 in the following manner.

A pre-mixture is loaded into a 4 litre four-neck flask which can be agitated, heated and equipped with a system allowing the elimination by distillation of the water and ethylhexanol, said premixture containing:
- 578 g of 100 Neutral oil,
- 65.7 g (0.89 mole) of dead lime Ca(OH)₂ and
- a solution at 10% by weight in dodecylbenzene of SI 200 antifoaming agent marketed by Rhône-Poulenc.

The medium is heated to 60°C over 15 minutes with stirring at 400 revs/min; 609.7 g (1.15 moles) of sulphonic acid obtained in the previous stage, pre-heated to 60°C, is added.

After this addition, the temperature is raised over 10 minutes to 93°C. A plateau of 15 minutes took place at this temperature; then the medium is cooled down to 85°C by the addition of cool 2-ethylhexanol (100.7 g). The reaction medium is maintained at this temperature for 15 minutes, a time during which 23 g of water, then 4.5 g formic acid and 4.5 g of acetic acid are added.

The reaction medium is heated to 100°C over 15 minutes and is maintained at this temperature for 1 hour and 30 minutes.

Then reaction medium is taken to 120°C over 1 hour and maintained at this new temperature for 1 hour.

This first part of the reaction having been carried out at atmospheric pressure, the reaction medium is progressively placed under vacuum while heating at 195°C. It is then maintained for one hour under the following final conditions: 195°C and 4 x 10³ Pa (30 mm Hg).

The percentage of crude sediment is 0.4%.

The analyses and the filtration rate are shown in the table (page 1/4).

### Examples 2 to 22

In the following examples, the alkylation reaction was implemented by alkylation of different aromatic hydrocarbons with a linear mono-olefin, identified respectively in the first and second lines of the table below.

The alkylation conditions appear in the following lines of the table, which show the type of catalyst, the number of identical 1.15 litre reactors into which the reaction mixture passes in succession, and the relative proportions of catalyst in relation to the olefin (by volume or by weight) and of aromatic hydrocarbon in relation to the olefin (in moles) for each of the reactors.

The alkylaryl hydrocarbon obtained or alkylate is then analyzed, indicating the percentage of olefins (by weight) which has not reacted, the molar proportion of isomers in which the aryl radical is fixed in positions 1 and 2 of the starting olefin with respect to all the isomers, and their viscosity at 40 and 100°C.

The table then shows the results of analyses of the sulphonic acid obtained by the falling film technique, the sulphuric anhydride and alkylate being introduced in co-current at the top of a tube, the corresponding sulphuric acid being collected at the bottom of the tube, and the residual sulphonic acid being eliminated by thermal treatment.

The table terminates with the results of analyses carried out on calcium alkylaryl sulphonates, prepared by the process described in Example 1 above and it shows the contents of total calcium (CaT) and soluble calcium (CaS) (as percentages by weight), and the base number (BN) measured according to Standard ASTM-D 2.896.

The appearance is evaluated by mixing 10 g of calcium alkylaryl sulphonate in 90 g of 600 N oil and by attributing to time t = 0 and to the expiration of a period of one month of storage a figure ranging from 1 to 6, where 1 indicates a clear solution, 2 the presence of a slight turbidity and 3 the presence of turbidity, 4 the appearance of a deposit, 5 the presence of a deposit, and 6 the presence of a large deposit.

The viscosity is measured at 100°C after dilution of the product in 100 N oil until the solution obtained has a total calcium content of 2.35%.

The next line of the table shows the gross weight percentage of the sediments measured by method ASTM-D 2273 in which 25 cm³ of the product is diluted in a flask with petrol up to 100 cm³, after which the reading of the percentage of sediments is made after centrifugation of the flask.

The filtration rate is then given in kg/h/m².

And the last line of the table indicates the formation or absence of skin with a sample of 30 cm³ of sulphonate, placed in a 100 cm³ beaker, on the expiration of a period of one month, with indication of the number of days in cases in which the skin has appeared.

The anti-rust tests, which are not shown in the table, were carried out in each of the samples with seawater, using a method very similar to method ASTM-D 665, and helped to confirm visually the good anti-rust properties of the alkylaryl sulphonates according to the invention.

Examples 1 and 2 of the invention should be compared with Example 3, which is not of the invention.

Example 4 is the only example that implemented the invention with a mixture of C₂₀ to C₂₄ linear mono-olefin which is not a linear mono-alpha olefin but an isomer or a mixture of isomers having a maximum molar content of 13% of terminal ethylene double bond; the olefin of this example was obtained by isomerization of a linear mono-alpha olefin on an iron pentacarbonyl Fe(CO)₅ catalyst at 130°C and its infrared spectrum, shown in Figure 2, was used to confirm the disappearance of the absorption band at 908 cm⁻¹, characteristic of terminal carbon-carbon double bond at the end of the chain.

In Example 4 and comparative Example 5, the alkylation reaction has been carried out with a single reactor on a Friedel-Crafts catalyst of the montmorillonite clay type activated with acid and marketed under the trademark Fulcat 22B.

In these Examples 4 and 5, the alkylation reaction is carried out in the following manner.

In a 4 litre four-neck flask which can be agitated, heated and provided with a condensate separator surmounted by a vertical cooling apparatus, the following are placed:
- 920 g of toluene (10 moles)
- 584 g of C₂₀₋₂₄ linear olefin (2 moles) (olefin isomerized with iron pentacarbonyl for Example 4 and non-isomerized alpha-olefin for Example 5) and
- 58 g of Fulcat 22B (10% by weight relative to the olefin).

The reaction medium is heated under reflux at 122°C for 3 hours and 30 minutes at atmospheric pressure. The catalyst is eliminated by filtration and distillation is carried out to eliminate the excess toluene for 1 hour at 190°C under 12 x 10³ Pa (90 mm Hg).

The gas chromatograms of the alkylates of Examples 1 to 5, measured as described concerning Example 1, are shown in Figure 4 with the test numbers corresponding to each of these examples.

In the diagrams in Figure 4, the y-axis shows the percentage of each tolyl-eicosane isomer, each of them corresponding to a position of the tolyl-eicosane radical on the alkyl chain, all these isomers being related to 100%, and on the x-axis the retention times in minutes.

It is known from the literature that the isomers having the aryl group furthest from the end of the alkyl chain have the shortest retention times, and for the same number of carbons.

On each of the test results in Figure 4, the 2-tolyl-eicosane (C₂₀) isomer corresponds to the longest retention time of 9.9 min, the 3-tolyl-eicosane isomer to the retention time of 9.69 min, the 4-tolyl-eicosane isomer to the retention time of 9.57 min, and all the 5-, 6-, 7-, 8-, 9- and 10-tolyl-eicosane isomers are grouped at the intermediate retention time between 9.04 and 9.57 min with a majority peak at 9.38 min.

It may be observed that the progression of the contents of the 3- and 4-tolyl-eicosane isomers follows that of the 2-tolyl-eicosane isomer, and that only tests Nos.1, 2 and 4, corresponding to a molar content of less than 13%, correspond to alkylaryl hydrocarbons of the present invention.

The comparative Examples 6 and 8 can be compared respectively with Examples 7 and 9 of the invention, and illustrate the implementation of the invention with C₁₈ and C₁₆ linear mono-alpha olefins.

Comparative Example 8 was carried out with an alkylation reaction on sulphonic ion exchange resin marketed by the company Röhm and Haas under the name of Amberlyst 36 Dry.

The alkylation conditions of this comparative Example 8 are identical to those of Examples 4 and 5, with the double reservation of changes of catalyst and of olefin mentioned in the table.

The following examples illustrate the use of different aromatic hydrocarbons, namely ethyl benzene in Examples 10 and 11, benzene in comparative Examples 12 and 13, ortho-xylene in Examples 14 and 15, a mixture of ortho, meta and para xylenes in Examples 16 and 17, and cumene in Examples 18 and 19.

Comparatives Examples 20 and 21 show the use of a C₁₈ linear mono-alpha olefin and comparative Example 22 a C₁₆ linear mono-alpha olefin.

The results show the impossibility of obtaining a superalkalinized calcium alkylaryl sulphonate having acceptable properties if the aryl radical is benzene, because it was never possible to prevent the formation of a skin with the use of this aromatic hydrocarbon, even if an attempt was made to alkylate it with a linear mono-olefin having a long chain length and a high degree of isomerization.

On the contrary, with toluene, alkylaryl sulphonates are obtained having encouraging performance characteristics.

The same may be said of the other alkyl derivatives of benzene, but problems connected with the difficulty of reducing the value of sulphuric acid to a content lower than 0.5% during the thermal treatment appear with the different xylenes.

As to ethylbenzene and cumene, they help to mask slightly the effect of the degree of isomerization of the olefin due to the beneficial influence of the size of the aromatic ring on the performance of the corresponding superalkalinized calcium alkylaryl sulphonate.

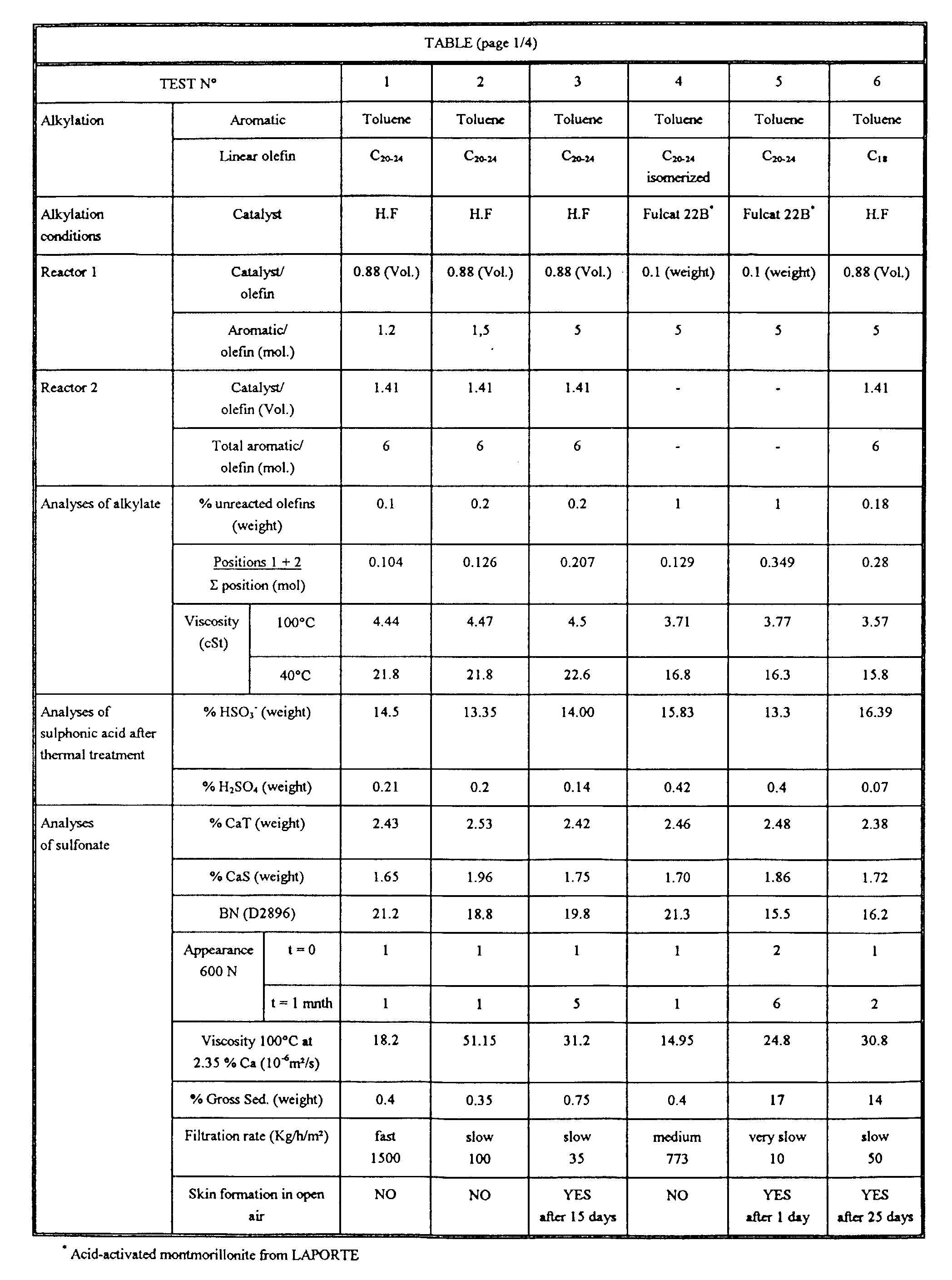

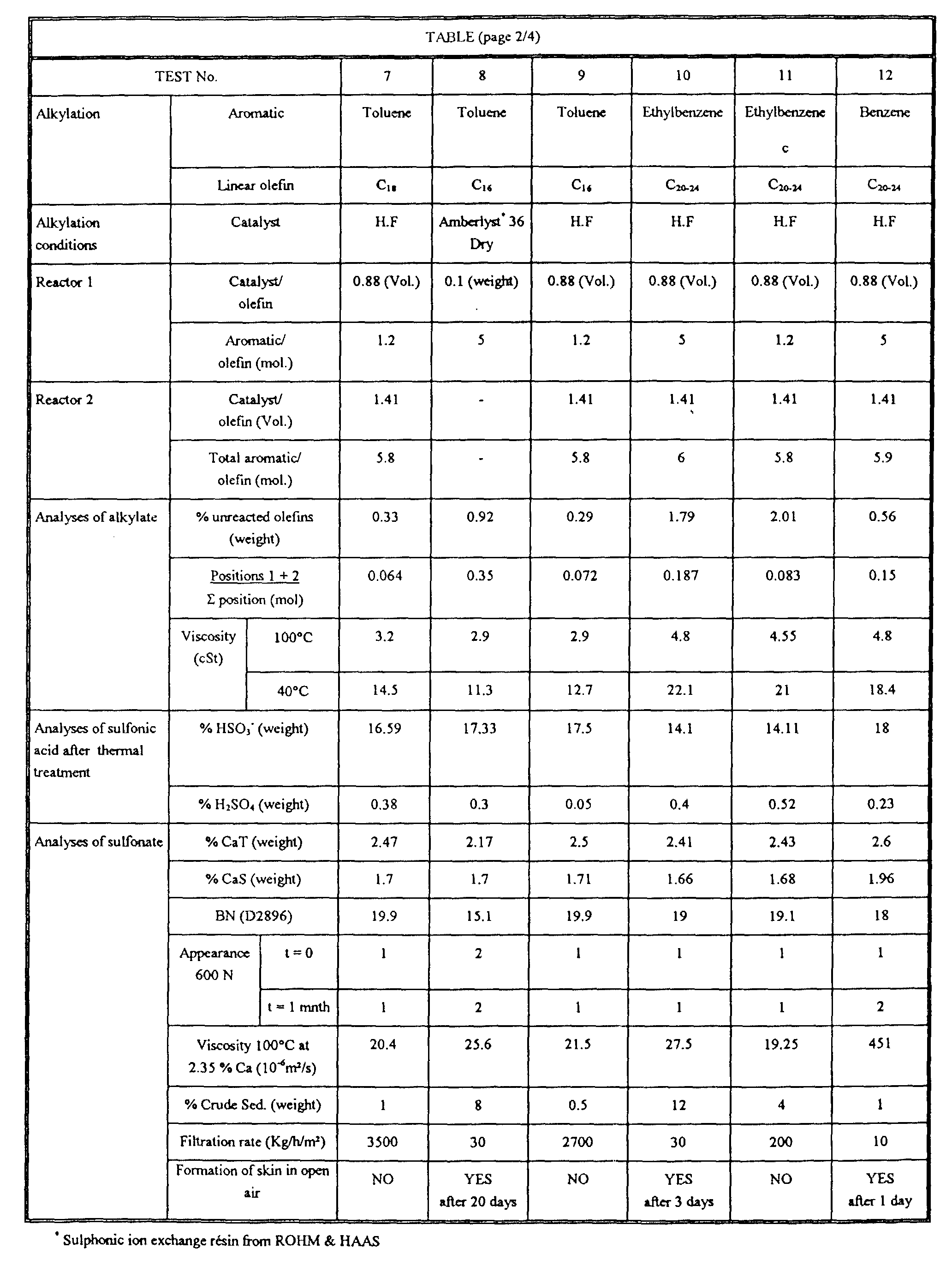

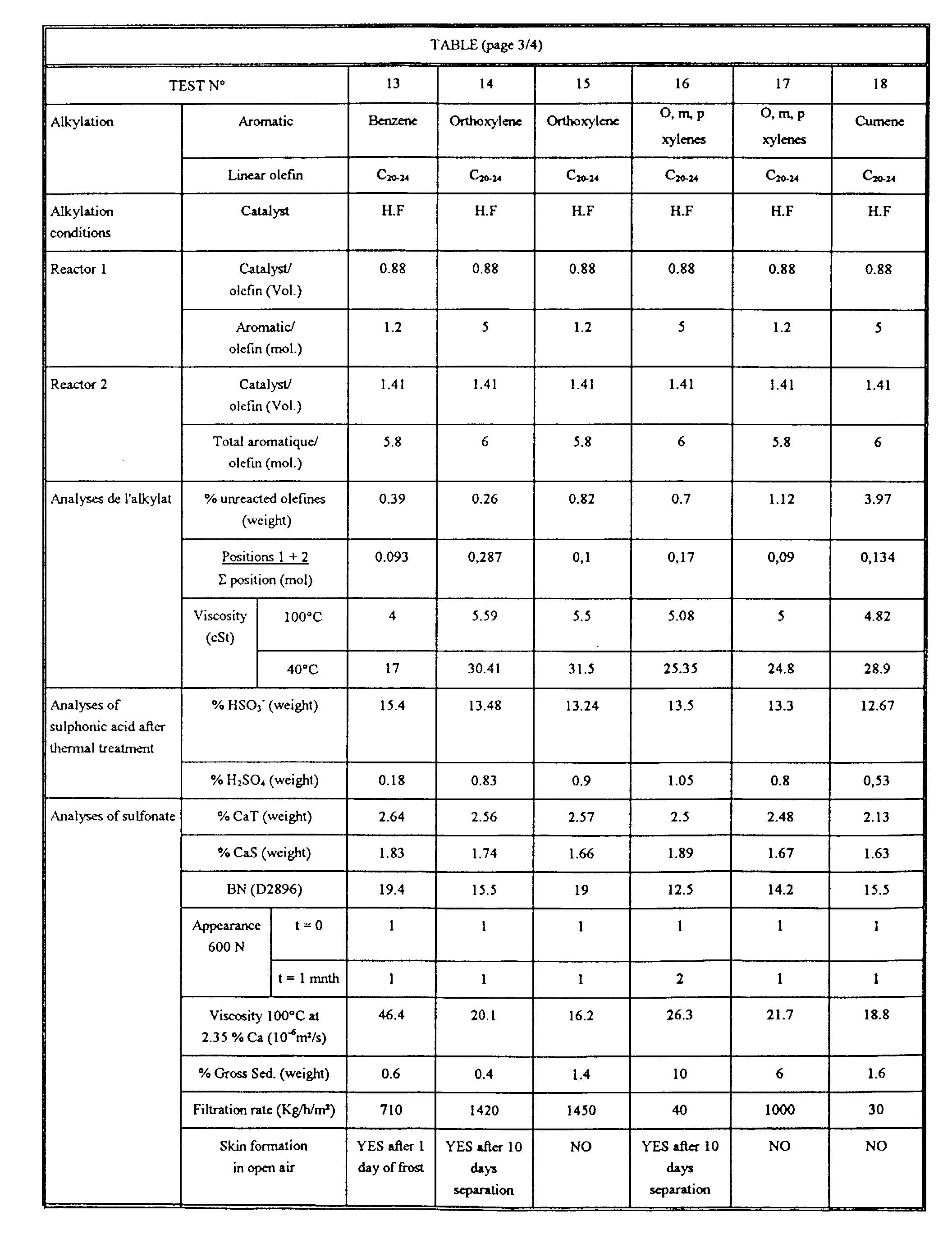

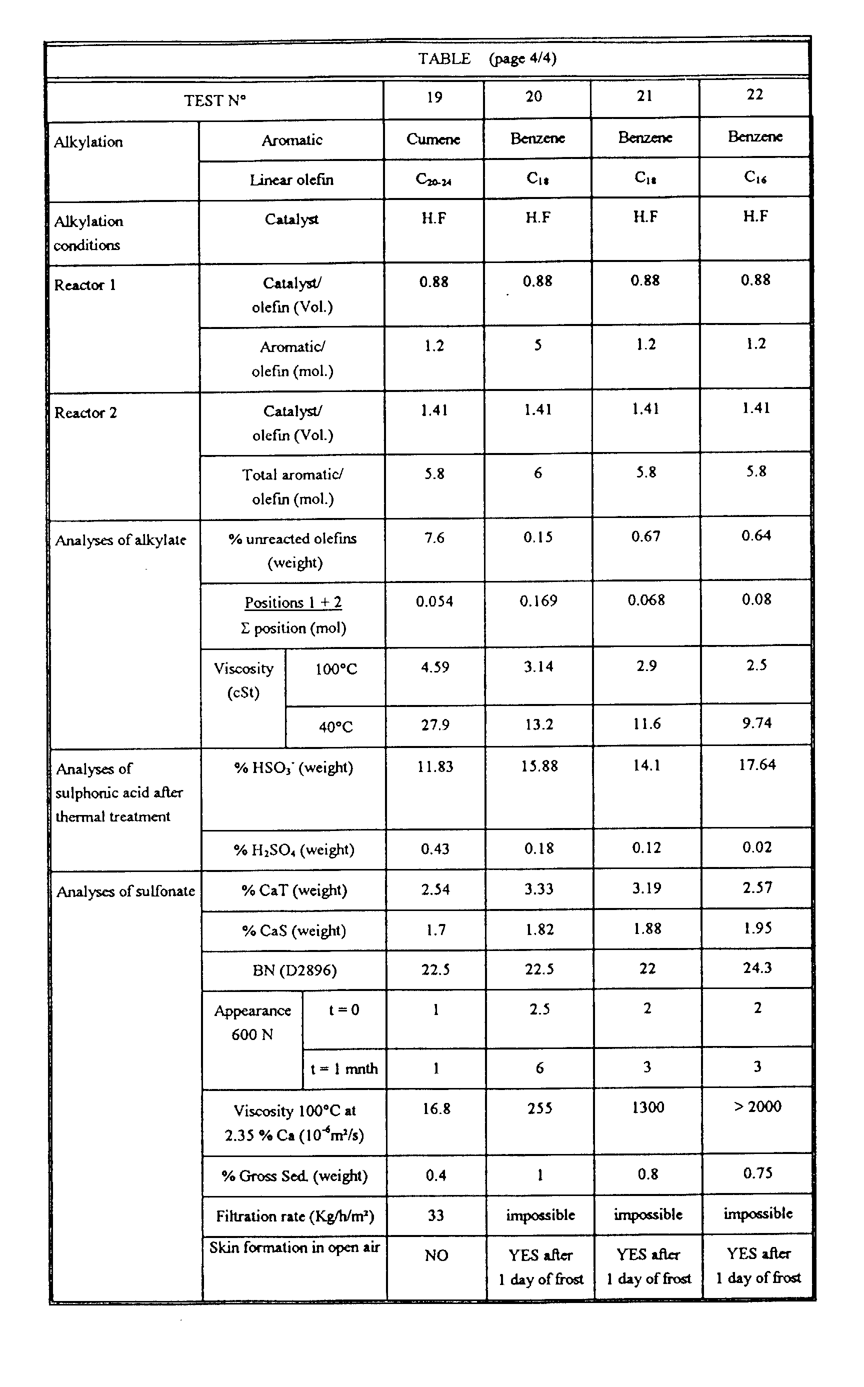

## Claims

1. A superalkalinized alkylaryl sulfonate of alkaline earth metal, wherein the aryl radical is other than phenyl, wherein the alkyl chain is a linear chain that contains between 14 and 40 carbon atoms, and wherein said aryl-sulfonate radical of alkaline earth metal is fixed, in a molar proportion comprised between 0 and 13% in positions 1 or 2 of the linear alkyl chain.

2. A superalkalinized alkylaryl sulfonate of alkaline earth metal according to Claim 1 wherein said aryl-sulfonate radical of alkaline earth metal is fixed, in a molar proportion comprised between 5 and 11% in positions 1 or 2 of the linear alkyl chain.

3. A superalkalinized alkylaryl sulfonate of alkaline earth metal according to Claim 2 wherein said aryl-sulfonate radical of alkaline earth metal is fixed, in a molar proportion comprised between 7 and 10% in positions 1 or 2 of the linear alkyl chain.

4. A superalkalinized alkylaryl sulfonate of alkaline earth metal according to Claim 1, 2, or 3, wherein said aryl radical is selected from the group consisting of tolyl, xylyl, o-xylyl, ethyl-phenyl, and cumenyl radicals.

5. A superalkalinized alkylaryl sulfonate of alkaline earth metal according to Claim 1 2, 3, or 4, wherein said alkyl chain contains between 16 and 30 carbon atoms.

6. A superalkalinized alkylaryl sulfonate of alkaline earth metal according to Claim 5 wherein said alkyl chain contains between 20 and 24 carbon atoms.

7. An alkylaryl hydrocarbon comprising an aryl substituent other than phenyl on a linear alkyl chain containing between 14 and 40 carbon atoms, wherein the molar proportion of aryl substituent on positions 1 and 2 of the linear alkyl chain is comprised between 0 and 13%.

8. An alkylaryl hydrocarbon according to Claim 7 wherein the molar proportion of aryl substituent on positions 1 and 2 of the linear alkyl chain is comprised between 5 and 11%.

9. An alkylaryl hydrocarbon according to Claim 8 wherein the molar proportion of aryl substituent on positions 1 and 2 of the linear alkyl chain is comprised between 7 and 10%.

10. An alkylaryl hydrocarbon according to Claim 7, 8, or 9, wherein said aryl substituent is selected from the group consisting of tolyl, xylyl, o-xylyl, ethyl-phenyl, and cumenyl.

11. An alkylaryl hydrocarbon according to Claim 7, 8, 9, or 10, wherein said alkyl chain contains between 16 and 30 carbon atoms.

12. An alkylaryl hydrocarbon according to Claim 11 wherein said alkyl chain contains between 20 and 24 carbon atoms.

13. A process for the preparation of an alkylaryl hydrocarbon according to Claim 7 comprising the steps of:
(a) the isomerization of a linear mono-alpha olefin containing between 14 and 40 carbon atoms to produce a linear mono-olefin containing a molar proportion of between 0 and 13% of alpha olefin,
(b) the alkylation, by the Friedel-Crafts reaction, of an aryl hydrocarbon other than benzene by said linear mono-olefin.

14. A process according to Claim 13 wherein said linear mono-olefin contains a molar proportion of between 5 and 11% of alpha olefin,

15. A process according to Claim 14 wherein said linear mono-olefin contains a molar proportion of between 7 and 10% of alpha olefin,

16. A process according to Claim 13, 14, or 15, further comprising the steps of:
(c) the sulfonation of the alkylaryl hydrocarbon obtained from step (b), and
(d) the reaction of the resulting sulfonic acid with an excess of alkaline earth base.

17. A process according to Claim 16 wherein the catalyst used in the Friedel-Crafts reaction is selected from the group consisting of hydrofluoric acid, aluminum chloride, boron fluoride, a sulfonic ion exchange resin, and an acid-activated clay.

18. A process for the preparation of an alkylaryl hydrocarbon according to Claim 7 comprising the alkylation, by the Friedel-Crafts reaction, of an aryl hydrocarbon other than benzene by a linear mono-olefin containing between 14 and 40 carbon atoms, and having a molar proportion of alpha olefin of at least 80%, wherein the alkylation takes place in a first step in which the molar ratio between the aryl hydrocarbon and the linear mono-alpha olefin is a maximum of 1.5, and in a second step in which said ratio is a minimum of 2.

19. A process according to Claim 18 wherein the alkylation takes place in a first step in which the molar ratio between the aryl hydrocarbon and the linear mono-alpha olefin is a maximum of 1, and in a second step in which said ratio is a minimum of 5.

20. A process according to Claim 18 or 19 further comprising the steps of:
(a) the sulfonation of the alkylaryl hydrocarbon obtained from the second step of the alkylation, and
(b) the reaction of the resulting sulfonic acid with an excess of alkaline earth base.

## Patentansprüche

1. Superalkalinisiertes Erdalkalimetall-Alkylarylsulfonat, wobei das Aryl-Radikal nur nicht Phenyl ist, die Alkyl-Kette linear ist und zwischen 14 und 40 Kohlenstoffatome besitzt und das Erdalkalimetall-Arylsulfonatradikal in einem molaren Anteil zwischen 0% und 13% an der Position 1 oder 2 der linearen Alkyl-Kette angehängt ist.

2. Superalkalinisiertes Erdalkalimetall-Alkylarylsulfonat nach Anspruch 1, wobei das Erdalkalimetal1-Arylsulfonatradikal in einem molaren Anteil zwischen 5 und 11% an der Position 1 oder 2 der linearen Alkyl-Kette angehängt ist.

3. Superalkanisiertes Erdalkalimetall-Alkylarylsulfonat nach Anspruch 2, wobei das Erdalkalimetall-Arylsulfonatradikal in einem molaren Anteil zwischen 7% und 10% an der Position 1 oder 2 der linearen Alkyl-Kette angehängt ist.

4. Superalkalinisiertes Erdalkalimetall-Alkylarylsulfonat nach Anspruch 1, 2 oder 3, wobei das Aryl-Radikal ausgewählt ist aus der Gruppe Tolyl-, Xylyl-, o-Xylyl-, Ethylphenyl-, Cumenyl-Radikal.

5. Superalkalinisiertes Erdalkalimetall-Alkylarylsulfonat nach Anspruch 1, 2, 3 oder 4, wobei die Alkyl-Kette zwischen 16 und 30 Kohlenstoffatome besitzt.

6. Superalkalinisiertes Erdalkalimetall-Alkylarylsulfonat nach Anspruch 5, wobei die Alkyl-Kette zwischen 20 und 24 Kohlenstoffatome besitzt.

7. Alkylaryl-Kohlenwasserstoff, enthaltend einen Aryl-Substituenten, der nur nicht Phenyl ist, an einer linearen Alkyl-Kette, die zwischen 14 und 40 Kohlenstoffe enthält, wobei der molare Anteil Aryl-Substituent an den Positionen 1 und 2 der linearen Alkyl-Kette zwischen 0% und 13% liegt.

8. Alkylaryl-Kohlenwasserstoff nach Anspruch 7, wobei der molare Anteil Aryl-Substituent an den Positionen 1 und 2 der linearen Alkyl-Kette zwischen 5 und 11% liegt.

9. Alkylaryl-Kohlenwasserstoff nach Anspruch 8, wobei der molare Anteil Aryl-Substituent an den Positionen 1 und 2 der linearen Alkyl-Kette zwischen 7% und 10% liegt.

10. Alkylaryl-Kohlenwasserstoff nach Anspruch 7, 8 oder 9, wobei der Aryl-Substituent ausgewählt ist aus der Gruppe Tolyl, Xylyl, o-Xylyl, Ethylphenyl, Cumenyl.

11. Alkylaryl-Kohlenwasserstoff nach Anspruch 7, 8, 9 oder 10, wobei die Alkyl-Kette zwischen 16 und 30 Kohlenstoffatome enthält.

12. Alkylaryl-Kohlenwasserstoff nach Anspruch 11, wobei die Alkyl-Kette zwischen 20 und 24 Kohlenstoffatome enthält.

13. Verfahren zur Herstellung eines Alkylaryl-Kohlenwasserstoffs nach Anspruch 7, umfassend die Schritte:
(a) Isomerisierung eines linearen Mono-Alpha-Olefins, das zwischen 14 und 40 Kohlenstoffatome besitzt, so dass man ein lineares Mono-Olefin enthält, das einen molaren Anteil zwischen 0% und 13% Alpha-Olefin enthält,
(b) Alkylierung eines Aryl-Kohlenwasserstoffs, der kein Benzol ist, in einer Friedel-Crafts-Reaktion mit einem linearen Mono-Olefin.

14. Verfahren nach Anspruch 13, wobei das lineare Mono-Olefin in einem molaren Anteil von 5% bis 11% Alpha-Olefin enthält.

15. Verfahren nach Anspruch 14, wobei das lineare Mono-Olefin in einem molaren Anteil zwischen 7% und 10% Alpha-Olefin enthält.

16. Verfahren nach Anspruch 13, 14 oder 15, das zudem die Schritte aufweist:
(c) Sulfonierung eines Alkylaryl-Kohlenwasserstoffs aus Schritt b) und
(d) Umsetzen der resultierenden Sulfonsäure mit einem Überschuss an Erdalkalibase.

17. Verfahren nach Anspruch 16, wobei der in der Friedel-Crafts-Reaktion verwendete Katalysator ausgewählt ist aus der Gruppe Fluorwasserstoffsäure, Aluminiumchlorid, Borfluorid, Sulfonsäureion-Austauscherharz und säureaktiviertem Ton.

18. Verfahren zur Herstellung von Alkylaryl-Kohlenwasserstoff nach Anspruch 7, umfassend die Alkylierung eines Aryl-Kohlenwasserstoffs, der nur nicht Benzol ist, in einer Friedel-Crafts-Reaktion mit einem linearen Mono-Olefin, das zwischen 14 und 40 Kohlenstoffatome und einen molaren Anteil an Alpha-Oefin von mindestens 80% besitzt, wobei die Alkylierung erfolgt in einem ersten Schritt, bei dem das Molverhältnis zwischen dem Aryl-Kohlenwasserstoff und dem linearen Mono-Alpha-Olefin maximal 1,5 ist, und in einem zweiten Schritt, wo dieses Verhältnis mindestens 2 ist.

19. Verfahren nach Anspruch 18, wobei die Alkylierung erfolgt in einem ersten Schritt, wobei das Molverhältnis zwischen dem Aryl-Kohlenwasserstoff und dem linearen Mono-Alphe-Olefin maximal 1 ist und in einem zweiten Schritt, wo das Verhältnis mindestens 5 ist.

20. Verfahren nach Anspruch 18 oder 19, das zudem die Schritte aufweist:
(a) die Sulfonierung des Alkylaryl-Kohlenwasserstoffs, erhalten aus dem zweiten Schritt der Alkylierung, und
(b) die Umsetzung der resultierenden Sulfonsäure mit einem Überschuss an Erdalkalibase.

## Revendications

1. Alkylarylsulfonate de métal alcalino-terreux suralcalinisé, dans lequel le radical aryle est un radical autre qu'un radical phényle, la chaîne alkyle est une chaîne linéaire qui contient 14 à 40 atomes de carbone et ledit radical arylsulfonate de métal alcalino-terreux est fixé, en une proportion molaire comprise dans l'intervalle de 0 à 13 %, en position 1 ou 2 de la chaîne alkyle linéaire.

2. Alkylarylsulfonate de métal alcalino-terreux suralcalinisé suivant la revendication 1, dans lequel ledit radical arylsulfonate de métal alcalino-terreux est fixé, en une proportion molaire comprise dans l'intervalle de 5 à 11 %, en position 1 ou 2 de la chaîne alkyle linéaire.

3. Alkylarylsulfonate de métal alcalino-terreux suralcalinisé suivant la revendication 2, dans lequel ledit radical arylsulfonate de métal alcalino-terreux est fixé, en une proportion molaire comprise dans l'intervalle de 7 à 10 %, en position 1 ou 2 de la chaîne alkyle linéaire.

4. Alkylarylsulfonate de métal alcalino-terreux suralcalinisé suivant la revendication 1, 2 ou 3, dans lequel ledit radical aryle est choisi dans le groupe consistant en les radicaux tolyle, xylyle, o-xylyle, éthyl-phényle et cuményle.

5. Alkylarylsulfonate de métal alcalino-terreux suralcanilisé suivant la revendication 1, 2, 3 ou 4, dans lequel ladite chaîne alkyle contient 16 à 30 atomes de carbone.

6. Alkylarylsulfonate de métal alcalino-terreux suralcalinisé suivant la revendication 5, dans lequel ladite chaîne alkyle contient 20 à 24 atomes de carbone.

7. Hydrocarbure alkylarylique comprenant un substituant aryle autre qu'un substituant phényle sur une chaîne alkyle linéaire contenant 14 à 40 atomes de carbone, dans lequel la proportion molaire de substituant aryle en positions 1 et 2 de la chaîne alkyle linéaire est comprise dans l'intervalle de 0 à 13 %.

8. Hydrocarbure alkylarylique suivant la revendication 7, dans lequel la proportion molaire de substituant aryle en positions 1 et 2 de la chaîne alkyle linéaire est comprise dans l'intervalle de 5 à 11 %.

9. Hydrocarbure alkylarylique suivant la revendication 8, dans lequel la proportion molaire de substituant aryle en positions 1 et 2 de la chaîne alkyle linéaire est comprise dans l'intervalle de 7 à 10 %.

10. Hydrocarbure alkylaryle suivant la revendication 7, 8 ou 9, dans lequel le substituant aryle est choisi dans le groupe consistant en les substituants tolyle, xylyle, o-xylyle, éthyl-phényle, et cuményle.

11. Hydrocarbure alkylarylique suivant la revendication 7, 8, 9 ou 10, dans lequel ladite chaîne alkyle contient 16 à 30 atomes de carbone.

12. Hydrocarbure alkylarylique suivant la revendication 11, dans lequel ladite chaîne alkyle contient 20 à 24 atomes de carbone.

13. Procédé pour la préparation d'un hydrocarbure alkylarylique suivant la revendication 7, comprenant les étapes :
(a) d'isomérisation d'une mono-alpha-oléfine linéaire contenant 14 à 40 atomes de carbone pour produire une mono-oléfine linéaire contenant une proportion molaire de 0 à 13 % d'alpha-oléfine,
(b) d'alkylation, par la réaction de Friedel-Crafts, d'un hydrocarbure arylique autre que le benzène par ladite mono-oléfine linéaire.

14. Procédé suivant la revendication 13, dans lequel ladite mono-oléfine linéaire contient une proportion molaire de 5 à 11 % d'alpha-oléfine.

15. Procédé suivant la revendication 14, dans lequel ladite mono-oléfine linéaire contient une proportion molaire de 7 à 10 % d'alpha-oléfine.

16. Procédé suivant la revendication 13, 14 ou 15, comprenant en outre les étapes :
(c) de sulfonation de l'hydrocarbure alkylarylique obtenu dans l'étape (b), et
(d) de réaction de l'acide sulfonique résultant avec un excès d'une base alcalino-terreuse.

17. Procédé suivant la revendication 16, dans lequel le catalyseur utilisé dans la réaction de Friedel-Crafts est choisi dans le groupe consistant en acide fluorhydrique, chlorure d'aluminium, fluorure de bore, une résine sulfonique échangeuse d'ions et une argile activée avec un acide.

18. Procédé pour la préparation d'un hydrocarbure alkylarylique suivant la revendication 7, comprenant l'alkylation, par la réaction de Friedel-Crafts, d'un hydrocarbure arylique autre que le benzène par une mono-oléfine linéaire contenant 14 à 40 atomes de carbone, et ayant une proportion molaire d'alpha-oléfine d'au moins 80 %, dans lequel l'alkylation s'effectue dans une première étape dans laquelle le rapport molaire entre l'hydrocarbure arylique et la mono-alpha-oléfine linéaire est égal au maximum à 1,5, et dans une seconde étape dans laquelle ledit rapport est égal au minimum à 2.

19. Procédé suivant la revendication 18, dans lequel l'alkylation s'effectue dans une première étape dans laquelle le rapport molaire entre l'hydrocarbure arylique et la mono-alpha-oléfine linéaire est au maximum égal à 1, et dans une seconde étape dans laquelle ledit rapport est au minimum égal à 5.

20. Procédé suivant la revendication 18 ou 19, comprenant en outre les étapes :
(a) de sulfonation de l'hydrocarbure alkylarylique obtenu dans la seconde étape de l'alkylation, et
(b) de réaction de l'acide sulfonique résultant avec un excès d'une base alcalino-terreuse.
